# EUROPÄISCHE PATENTSCHRIFT

(11) **EP 0 612 985 B1**
(45) Veröffentlichungstag und Bekanntmachung des Hinweises auf die Patenterteilung: **09.04.1997**
(21) Anmeldenummer: 93118760.3
(22) Anmeldetag: 22.11.1993
(51) Int. Cl.: G01G 21/24

(54) **Kraftmessvorrichtung, insbesondere Waage**
Device for measurement of force, especially a balance
Dispositif pour mesurer une force, notamment une balance

(30) Priorität: 22.02.1993 DE 4305426
(43) Veröffentlichungstag der Anmeldung: 31.08.1994
(73) Patentinhaber: Mettler-Toledo AG, CH-8606 Greifensee (CH)
(72) Erfinder: Burkhard, Hans-Rudolf, CH-8492 Wila (CH)
(74) Vertreter: Patentanwälte Leinweber & Zimmermann

(56) Entgegenhaltungen:
- EP-A- 0 518 202

## Beschreibung

Die Erfindung bezieht sich auf eine Kraftmeßvorrichtung, insbesondere Waage, mit einer einen feststehend abgestützten Parallelogrammschenkel, zwei zueinander parallele, längssteife, in der Parallelogrammebene biegeelastische Lenker und einen mittels der Lenker an dem feststehend abgestützten Parallelogrammschenkel parallel auslenkbar geführten Parallelogrammschenkel zur Aufnahme der zu messenden Kraft aufweisenden Parallelogrammführung, einem Meßwandler zur Lieferung eines der zu messenden Kraft entsprechenden Signals, und einer zur Übertragung mindestens eines Teils der den auslenkbar geführten Parallelogrammschenkel belastenden zu messenden Kraft auf den Meßwandler dienenden Einrichtung, die mittels einer längssteifen, in der Parallelogrammebene biegeelastischen sowie einen lokalisierten, quer zur Parallelogrammebene biegeelastischen Bereich aufweisenden Koppel an den auslenkbaren Parallelogrammschenkel angekoppelt ist, sowie auf ein Verfahren zur Herstellung einer derartigen Kraftmeßvorrichtung.

Bei einer derartigen bekannten Waage (US-A-4 799 561, EP-A1 - 518202), deren Meßwandler auf dem bekannten Prinzip der elektromagnetischen Kraftkompensation beruht und deren Kraftübertragungseinrichtung durch einen sich zwischen der Koppel und der Tauchspule des elektromagnetischen Kraftkompensationssystems erstreckenden Hebel gebildet ist, sollen durch den quer zur Parallelogrammebene biegeelastischen Bereich der Koppel Meßfehler vermieden werden, die durch ein von der zu wiegenden Last in der zur Parallelogrammebene senkrechten Ebene hervorgerufenes Drehmoment verursacht sind. Derartige Drehmomente treten dann auf, wenn die zu wiegende Last auf eine mit dem auslenkbar geführten Parallelogrammschenkel verbundene Waagschale in der zur Parallelogrammebene senkrechten Ebene gegen das Zentrum des auslenkbar geführten Parallelogrammschenkels seitlich versetzt aufgebracht wird. Die durch dieses Drehmoment in der zur Parallelogrammebene senkrechten Ebene hervorgerufene tordierende Verdrehung der Parallelogrammführung, insbesondere des die zu messende Gewichtskraft aufnehmenden, auslenkbar geführten Parallelogrammschenkels, soll bei der bekannten Waage durch den quer zur Parallelogrammebene biegeelastischen Bereich der Koppel aufgenommen und dadurch eine Übertragung der tordierenden Verdrehung auf den Hebel und den Meßwandler vermieden werden. Wenngleich man annehmen könnte, daß durch diese bekannte Maßnahme das Problem auf die Parallelogrammführung ausgeübter, lastangriffsabhängiger seitlicher Drehmomente gelöst ist, hat sich jedoch bei genauerer Untersuchung gezeigt, daß durch die bloße Ausbildung eines lokalisierten, quer zur Parallelogrammebene biegeelastischen Bereichs an irgendeiner Stelle der Koppel die Seitenlastfehler für die Zwecke hochauflösender Waagen nicht ausreichend unterdrückt werden können.

Eine sowohl in der Parallelogrammebene als auch quer zur Parallelogrammebene biegeelastische Koppel anderer Art ist aus der CH-A5-652 207 bekannt. Bei dieser Koppel sind die Biegeelastizitäten quer zur Parallelogrammebene und in der Parallelogrammebene an jedem Endbereich der Koppel unmittelbar nebeneinanderliegend lokalisiert, während sich die Koppel zwischen diesen endständigen Paaren von Biegeelastizitäten mit demgegenüber erheblich größerer Materialstärke biegesteif erstreckt. Auch durch die bloße Anordnung zweier lokalisierter, quer zur Parallelogrammebene biegeelastischer Bereiche an den Enden der Koppel läßt sich jedoch der Seitenlastfehler bei besonders hoch auflösenden Waagen nicht ausreichend unterdrücken.

Der Erfindung liegt die Aufgabe zugrunde, eine Kraftmeßvorrichtung, insbesondere Waage, der eingangs genannten Art dahingehend auszubilden, daß durch einen gegenüber der Parallelogrammebene seitlich versetzten Angriff der zu messenden Kraft hervorgerufene Fehler stärker unterdrückt sind. Ferner liegt der Erfindung die Aufgabe zugrunde, ein Verfahren zur Herstellung einer derartigen Kraftmeßvorrichtung anzugeben.

Erfindungsgemäß wird diese Aufgabe hinsichtlich der Kraftmeßvorrichtung dadurch gelöst, daß der quer zur Parallelogrammebene biegeelastische Bereich der Koppel in den Bereich der Achse einer bei außermittiger Belastung in der zur Parallelogrammebene senkrechten Ebene auftretenden Querverdrehung des auslenkbar geführten Parallelogrammschenkels gelegt ist.

Die Erfindung beruht also auf der Erkenntnis, daß das Problem der Seitenlastfehler nicht allein durch die Ausbildung eines quer zur Parallelogrammebene biegeelastischen Bereichs an der Koppel und eine bestimmte Vorgabe des Ortes des lokalisierten biegeelastischen Bereiches an der Koppel befriedigend gelöst werden kann, sondern daß es auch ganz wesentlich auf die Lagebeziehung zwischen der Achse der Querverdrehung der Parallelogrammführung bei Seitenlast und die räumliche Lage des quer zur Parallelogrammebene biegeelastischen Bereichs der Koppel ankommt. Erfindungsgemäß muß die Achse der Querverdrehung mit dem quer zur Parallelogrammebene biegeelastischen Bereich der Koppel möglichst genau zur Übereinstimmung gebracht werden. Hieraus folgt dann eine ganz erhebliche weitere Herabsetzung der Seitenlastfehler in dem von der Kraftmeßvorrichtung, insbesondere der Waage, erzeugten Meßergebnis.

Eine bevorzugte Ausführungsform der Kraftmeßvorrichtung ist derart gestaltet, daß die Lenker mit einer die Übereinstimmung des quer zur Parallelogrammebene biegeelastischen Bereichs mit der Achse der Querverdrehung herbeiführenden gegenseitigen Symmetrieabweichung ausgebildet sind. Das Erfordernis einer zumindest annähernden Übereinstimmung zwischen dem quer zur Parallelogrammebene biegeelastischen Bereich und der Achse der Querverdrehung des auslenkbar geführten Parallelogrammschenkels, das im allgemeinen nicht erfüllt ist, läßt sich also dadurch bewältigen, daß in der Parallelogrammführung die beiden Parallelogrammschenkel relativ zueinander unsymmetrisch ausgeführt werden. Dabei wird diese Symmetrieabweichung gerade derart dimensioniert, daß die erwünschte Übereinstimmung zwischen der Achse der Querverdrehung und dem biegeelastischen Bereich herbeigeführt wird. Sofern die Lenker über ihre gesamte Länge einen gleichbleibenden Querschnitt aufweisen, also ihre Biegeelastizität über die gesamte Länge gleichmäßig verteilt ist, kann die erforderliche Symmetrieabweichung dadurch eingestellt werden, daß, in der Parallelogrammebene gesehen, die Materialstärken der beiden Lenker voneinander verschieden gewählt werden. In diesem Fall ist das Verhältnis der beiden Abstände der Achse der Querverdrehung zu den beiden Parallelogrammlenkern gleich dem Kehrwert des Verhältnisses ihrer Materialstärken. Allgemeiner ist dieses Abstandsverhältnis gleich dem Kehrwert des Verhältnisses der Federkonstanten der beiden Lenker quer zur Parallelogrammebene. Bei höher auflösenden Ausführungsformen ist die Biegeelastizität der Lenker auf an ihren Enden ausgebildete biegeelastische Bereiche konzentriert, die durch Dünnstellen des Materials der Lenker gebildet sind. In diesem Fall wird die gewünschte Asymmetrie vorzugsweise dadurch erzeugt, daß die Dünnstellen des einen Lenkers mit einer anderen Materialstärke ausgeführt werden, als die Dünnstellen des anderen Lenkers.

Eine zweckmäßige weitere Ausgestaltung besteht ferner darin, daß der quer zur Parallelogrammebene biegeelastische Bereich der Koppel in den Mittenbereich ihrer zum auslenkbar geführten Parallelogrammschenkel parallelen Längsachse gelegt ist. Hierbei ist also die Koppel in bezug auf den in der Mitte ihrer Längserstreckung angeordneten biegeelastischen Bereich symmetrisch ausgebildet, was für die Funktion der Koppel als störungsfreie Übertragungsverbindung der zu messenden Kraft vom auslenkbar geführten Parallelogrammschenkel zur Kraftübertragungseinrichtung vorteilhaft ist. Doch fällt im allgemeinen dieser Mittenbereich der Koppel nicht mit der Achse der Querverdrehung der Parallelogrammführung zusammen, was jedoch durch die gezielte Symmetrieabweichung der Parallelogrammführung herbeigeführt werden kann.

Dem durch das Seitenlastproblem hervorgerufenen Meßfehler ist gleichzeitig und unabhängig vom Seitenlastfehler ein weiterer Meßfehler überlagert, der dadurch bedingt ist, daß eine symmetriestörende Verformung der Parallelogrammführung in der Parallelogrammebene auftritt, welche eine Abweichung der effektiven Eckpunkte der Parallelogrammführung von den Eckpunkten einer idealen Parallelogrammform verursacht. Infolge dieser Symmetriestörung bewegt sich der auslenkbar geführte Parallelogrammschenkel nicht mehr auf einer streng geradlinigen, zum feststehend abgestützten Parallelogrammschenkel parallelen Bahn, sondern erleidet zusätzlich eine geringfügige Längsverdrehung in der Parallelogrammebene. Wie im Rahmen der Erfindung festgestellt werden konnte, läßt sich der hierdurch hervorgerufene Anteil im Meßfehler dadurch wesentlich herabsetzen, daß die Achse einer bei Belastung in der Parallelogrammebene auftretenden Längsverdrehung des auslenkbar geführten Parallelogrammschenkels in den Bereich der zum auslenkbar geführten Parallelogrammschenkel parallelen Längsachse der Koppel gelegt ist.

Eine baulich besonders einfache Maßnahme zur Herbeiführung der gewünschten Lagebeziehung zwischen der Achse der Längsverdrehung und der Längsachse der Koppel besteht darin, daß die Parallelogrammführung eine die Übereinstimmung der Achse der Längsverdrehung mit dem Bereich der Längsachse der Koppel herbeiführende Symmetrieabweichung von einer strengen Parallelogrammform aufweist. Demgemäß braucht also nur mindestens ein Eckpunkt der Parallelogrammführung in geeigneter Weise von der einer strengen Parallelogrammform entsprechenden Lage abgerückt zu werden, um die gewünschte Lagebeziehung der betreffenden Achsen zu schaffen.

Wenngleich die Erfindung insbesondere von dem Grundgedanken der Herstellung einer geeigneten Lagebeziehung zwischen der Achse der Querverdrehung und dem quer zur Parallelogrammebene biegeelastischen Bereich Gebrauch macht und daher nicht davon abhängig ist, ob die Biegeelastizität der Koppel in der Parallelogrammebene über die gesamte Längserstreckung der Koppel verteilt oder lokalisiert ist, ist in einer zweckmäßigen Ausführungsform der Erfindung vorgesehen, daß die in der Parallelogrammebene vorgesehene Biegeelastizität der Koppel auf an deren Endbereichen lokalisierte Biegestellen konzentriert ist, über deren eine die Koppel mit dem auslenkbar geführten Parallelogrammschenkel und über deren andere die Koppel mit der Kraftübertragungseinrichtung verbunden ist. Durch diese Lokalisierung der die Biegeelastizität der Koppel in der Parallelogrammebene liefernden Biegestellen werden einerseits definierte geometrische Verhältnisse geschaffen. Andererseits kann bei der Ausbildung dieser lokalisierten Biegestellen innerhalb der gesamten Kraftmeßvorrichtung eine besondere Sorgfalt und Genauigkeit der Bearbeitung aufgewendet werden, um das Biegeverhalten möglichst günstig zu gestalten.

Ferner erweist es sich in diesem Zusammenhang als vorteilhaft, daß die Achse der Längsverdrehung in den Bereich einer der lokalisierten Biegestellen gelegt ist. Dies führt zu einer besonders starken Unterdrückung der durch die Längsverdrehung des Parallelogrammschenkels bei einer Verformung der Parallelogrammführung in ihrer Parallelogrammebene hervorgerufenen Meßfehler.

Eine in der Praxis besonders wichtige Art der Ausführung der erfindungsgemäßen Vorrichtung besteht darin, daß die Parallelogrammführung, die Koppel und die Kraftübertragungseinrichtung von Materialbereichen eines einstückigen Materialblocks gebildet sind, die durch von den Materialblock senkrecht zur Parallelogrammebene durchsetzenden Ausnehmungen gebildete materialfreie Bereiche begrenzt sind. Es handelt sich hierbei also um eine einstückige Ausführungsform, bei der keinerlei Montageaufwand für das Zusammensetzen einzelner Teile nötig ist und insbesondere auch keine Justierungen der einzelnen Teile zueinander erforderlich sind. Demgegenüber ist die Ausbildung der materialfreien Bereiche, beispielsweise ausgehend von einem Materialvollblock durch Funkenerodieren, herstellungstechnisch weit günstiger.

In vorteilhaften Ausgestaltungen derartiger einstückiger Ausführungsformen sind sodann die betreffenden Biegeelastizitäten dadurch verwirklicht, daß die biegeelastischen Bereiche durch Dünnstellen der betreffenden Materialbereiche gebildet sind.

Eine für die Praxis wichtige Anwendung der E-rfindung betrifft Kraftmeßvorrichtungen, insbesondere Waagen, bei denen die auf den parallel auslenkbar geführten Parallelogrammschenkel einwirkende, zu messende Kraft vor ihrer Übertragung auf den Meßwandler einer Kraftwandlung, insbesondere einer Kraftuntersetzung, unterzogen werden. Insbesondere ist bei derartigen Ausführungsformen vorgesehen, daß die Kraftübertragungseinrichtung mindestens einen zwischen der Koppel und dem Meßwandler angeordneten Hebel aufweist.

Die Erfindung stellt auch ein Verfahren zur Herstellung einer Kraftmeßvorrichtung, insbesondere einer Waage, mit einer einen feststehend abgestützten Parallelogrammschenkel, zwei zueinander parallele, längssteife, in der Parallelogrammebene biegeelastische Lenker und einen mittels der Lenker an dem feststehend abgestützten Parallelogrammschenkel parallel auslenkbar geführten Parallelogrammschenkel zur Aufnahme der zu messenden Kraft aufweisenden Parallelogrammführung, einem Meßwandler zur Lieferung eines der zu messenden Kraft entsprechenden Signals, und einer zur Übertragung mindestens eines Teils der den auslenkbar geführten Parallelogrammschenkel belastenden zu messenden Kraft auf den Meßwandler dienenden Einrichtung, die mittels einer längssteifen, in der Parallelogrammebene biegeelastischen sowie einen lokalisierten, quer zur Parallelogrammebene biegeelastischen Bereich aufweisenden Koppel an den auslenkbaren Parallelogrammschenkel angekoppelt ist, zur Verfügung, das dadurch gekennzeichnet ist, daß man den quer zur Parallelogrammebene biegeelastischen Bereich der Koppel an eine vorbestimmte Stelle auf der zum auslenkbar geführten Parallelogrammschenkel parallelen Längsachse der Koppel legt und die Achse einer bei außermittiger Belastung in der zur Parallelogrammebene senkrechten Ebene auftretenden Querverdrehung des auslenkbar geführten Parallelogrammschenkels durch eine gegenseitig unsymmetrische Ausbildung der beiden Lenker in den Bereich der vorbestimmten Stelle legt. Bei diesem Verfahren wird also zunächst die Lage des quer zur Parallelogrammebene biegeelastischen Bereichs auf der Koppel in geeigneter Weise gewählt und die Achse der Querverdrehung der Parallelogrammführung in Abhängigkeit von der vorher gewählten Lage des biegeelastischen Bereichs eingestellt. Letzteres ist einfach dadurch möglich, daß die beiden Lenker nicht gleich, sondern unsymmetrisch ausgebildet werden, indem beispielsweise der eine Lenker insgesamt einen größeren Querschnitt erhält als der andere Lenker. Aus diesem erfindungsgemäßen Verfahren geht dann eine Gestaltung der Kraftmeßvorrichtung hervor, bei der Seitenlastfehler ganz erheblich vermindert sind.

In einer bevorzugten Ausführungsform des Verfahrens wird derart vorgegangen, daß man die vorbestimmte Stelle in die Mitte der Längsachse der Koppel legt. Bei der hieraus hervorgehenden Gestaltung der Kraftmeßvorrichtung ist dann die Koppel in bezug auf den quer zur Parallelogrammebene biegeelastischen Bereich symmetrisch.

Die Erfindung beinhaltet auch ein Verfahren zur Herstellung einer Kraftmeßvorrichtung, insbesondere einer Waage, mit einer einen feststehend abgestützten Parallelogrammschenkel, zwei zueinander parallele, längssteife, in der Parallelogrammebene biegeelastische Lenker und einen mittels der Lenker an dem feststehend abgestützten Parallelogrammschenkel parallel auslenkbar geführten Parallelogrammschenkel zur Aufnahme der zu messenden Kraft aufweisenden Parallelogrammführung, einem Meßwandler zur Lieferung eines der zu messenden Kraft entsprechenden Signals, und einer zur Übertragung mindestens eines Teils der den auslenkbar geführten Parallelogrammschenkel belastenden zu messenden Kraft auf den Meßwandler dienenden Einrichtung, die mittels einer längssteifen, in der Parallelogrammebene biegeelastischen sowie einen lokalisierten, quer zur Parallelogrammebene biegeelastischen Bereich aufweisenden Koppel an den auslenkbaren Parallelogrammschenkel angekoppelt ist, bei dem vorgesehen ist, daß man die Achse einer bei Belastung in der Parallelogrammebene auftretenden Längsverdrehung des auslenkbar geführten grammschenkels durch eine von der strengen Parallelogrammsymmetrie abweichende Formgebung der Parallelogrammführung in den Bereich der Längsachse der Koppel legt. Hierbei wird also die Geometrie der Parallelogrammführung in Abweichung von der strengen Parallelogrammsymmetrie, beispielsweise durch Versetzen mindestens einer der effektiven Parallelogrammecken gegenüber der strengen Parallelogrammform, geringfügig gestört, wobei diese Symmetriestörung gerade derart bemessen wird, daß die Achse der Längsverdrehung des die zu messende Kraft aufnehmenden, auslenkbar geführten Parallelogrammschenkels in den Bereich der Längsachse der Koppel verlegt wird. Es hat sich gezeigt, daß dann die durch die Längsverdrehung hervorgerufenen Meßfehler auf ein sehr kleines Maß unterdrückt werden können. Es ist darauf hinzuweisen, daß dieses Verfahren - ebenso wie die diesbezüglichen Vorrichtungsmerkmale - unabhängig von den mit der Kompensation von Seitenlastfehlern verbundenen Maßnahmen anwendbar ist. Sofern nicht auch gleichzeitig der Seitenlastfehler ausgeschaltet werden soll, braucht insoweit also die Koppel keine Biegeelastizität quer zur Parallelogrammebene aufzuweisen.

Am günstigsten wird das Verfahren derart gestaltet, daß man die Biegeelastizität der Koppel in der Parallelogrammebene durch an den Endbereichen der Koppel lokalisierte Biegestellen herstellt und die Achse der Längsverdrehung in eine dieser lokalisierten Biegestellen der Koppel legt.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht besonders erwähnten Einzelheiten ausdrücklich hingewiesen wird. Hierin zeigen:
- Fig. 1: eine perspektivische Ansicht eines Ausführungsbeispiels einer Waage mit abgenommener Waagschale und abgenommenem Gehäuse, und
- Fig. 2: das in Fig. 1 dargestellte Ausführungsbeispiel mit abgenommenem Meßwandler.

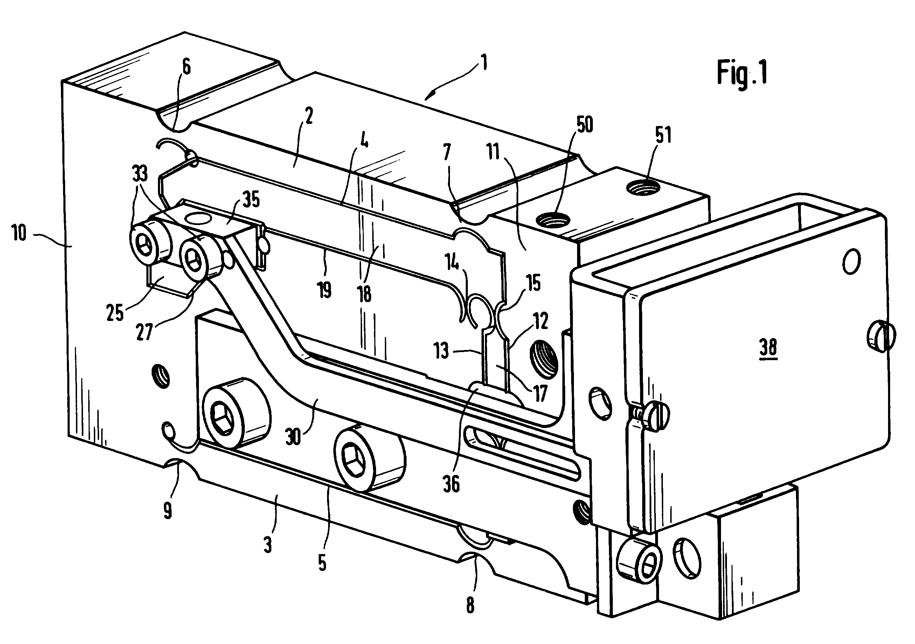

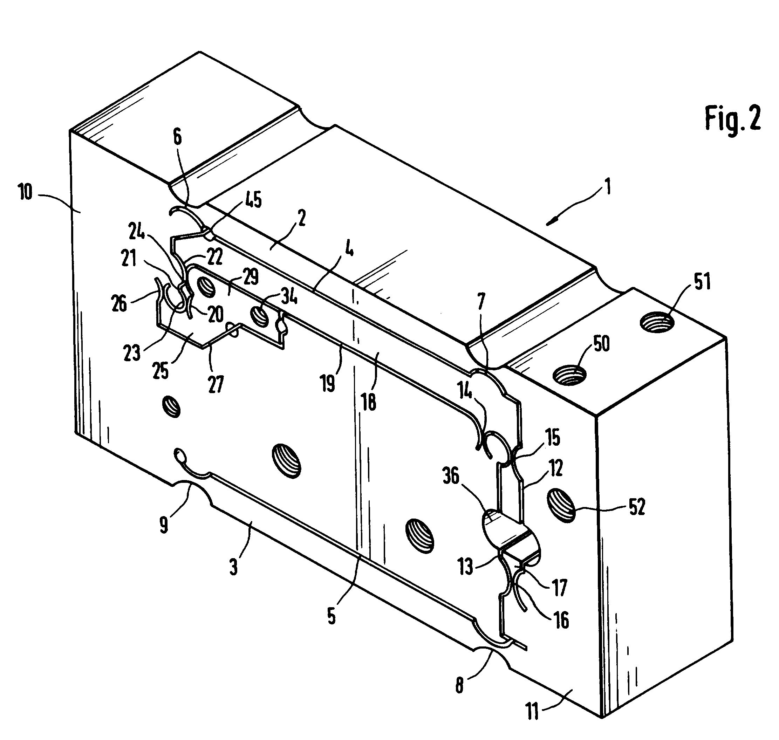

Wie aus Fig. 1 und 2 hervorgeht, ist bei der dort dargestellten Waage ein einstückiger Materialblock 1 in mehrere Materialbereiche unterteilt, die innerhalb des Materialblocks 1 von materialfreien Bereichen begrenzt sind. Diese materialfreien Bereiche sind jeweils durch Ausnehmungen des Materialblocks 1 gebildet, die denselben senkrecht zu seiner in den Figuren jeweils zum Betrachter weisenden Hauptebene vollständig durchsetzen. Dabei sind in dem dargestellten Ausführungsbeispiel diese materialfreien Bereiche, beispielsweise durch Funkenerodieren, in der Form dünner Schnittlinien ausgebildet. Wegen der dadurch bedingten minimalen Materialwegnahme weisen bei vorgegebenen Abmessungen des Materialblocks 1 dessen Materialbereiche eine höchstmögliche Festigkeit, insbesondere Biegesteifigkeit, auf. Wenngleich also die Ausbildung der materialfreien Bereiche in der Form dünner Schnittlinien insoweit sehr vorteilhaft ist, können alternativ die materialfreien Bereiche auch deutlich größere Querschnitte aufweisen, was beispielsweise bei deren Herstellung durch zerspanende Bearbeitung, wie Fräsen, der Fall ist.

Durch die materialfreien Bereiche ist in dem Materialblock 1 eine Parallelführung ausgebildet, deren Parallelogrammschenkel durch zwei zueinander parallele, längssteife, in der Parallelogrammebene biegeelastische Lenker 2, 3 gebildet sind und jeweils an ihrer einen Seite von der jeweiligen Außenkante des rechteckigen Materialblocks 1 und an ihrer Innenseite durch je einen materialfreien Bereich 4 bzw. 5 begrenzt sind. Die materialfreien Bereiche 4, 5, die sich in der Form der dünnen Schnittlinie parallel zu den beiden längeren Rechteckkanten erstrecken, sind in ihrem Endbereich zur jeweils benachbarten Längskante des Materialblocks 1 hin konvex ausgewölbt, wobei der Materialblock 1 in Gegenüberstellung zu diesen konvexen Auswölbungen der materialfreien Bereiche 4, 5 jeweils komplementäre Einwölbungen aufweist.

Die zwischen jeweils einander gegenüberstehenden Einwölbungen und Auswölbungen gebildeten Dünnstellen des Materialblocks liegen auf den vier Eckpunkten der die Parallelogrammführung geometrisch bestimmenden Parallelogrammform. Quer zur Längsrichtung der Lenker 2, 3 erstreckt sich ein Parallelogrammschenkel 10, der in nicht näher dargestellter Weise an einem Ständer oder einer Grundplatte der Waage feststehend abgestützt ist, während ein diesem Parallelogrammschenkel 10 jenseits der anderen Biegestellen 7, 8 gegenüberliegender Parallelogrammschenkel 11 mittels der Lenker 2, 3 an dem feststehend abgestützten Parallelogrammschenkel 10 parallel auslenkbar geführt ist. Dieser parallel auslenkbare Parallelogrammschenkel 11 dient zur Aufnahme einer zu messenden Kraft, beispielsweise der Gewichtskraft eines zu wiegenden Gewichtes, wobei die Einleitung der zu messenden Kraft unter Zwischenschaltung einer das Gewicht tragenden, nicht dargestellten Waagschale erfolgt, zu deren Befestigung der parallel auslenkbare Parallelogrammschenkel 11 mit Gewindebohrungen 50, 51 und 52 versehen ist.

Der auslenkbare Parallelogrammschenkel 11, dessen eine Begrenzung durch die sich quer zu den längeren Rechteckkanten erstreckende kürzere Rechteckkante gebildet ist, ist an seiner zum Inneren des Materialblocks 1 weisenden anderen Seite durch einen sich parallel zu dieser kürzeren Rechteckseite erstreckenden materialfreien Bereich 12 begrenzt, der ebenfalls in der Form der dünnen Schnittlinie ausgebildet ist und an zwei in einem Abstand zueinander gelegenen Stellen in Richtung auf den feststehend abgestützten Parallelogrammschenkel 10 hin konvex gewölbt ist. Während der materialfreie Bereich 12 mit der zur Biegestelle 8 hin weisenden konvexen Wölbung endet, ist er jenseits der der Biegestelle 7 zugewandten konvexen Wölbung mit dem materialfreien Bereich 4 verbunden.

Den beiden konvexen Wölbungen des materialfreien Bereichs 12 liegen zwei dazu komplementäre, zum auslenkbaren Parallelogrammschenkel 11 hin konvexe Wölbungen eines sich im übrigen parallel zum materialfreien Bereich 12 erstreckenden materialfreien Bereichs 13 gegenüber. Jenseits seiner zur Biegestelle 8 weisenden Wölbung setzt sich der materialfreie Bereich 13 bis zu dem den Lenker 3 begrenzenden materialfreien Bereich 5 fort, während er sich jenseits seiner zur Biegestelle 7 weisenden anderen Wölbung so weit bogenförmig fortsetzt, daß er eine als Abstützstelle für einen Hebel 18 einer Kraftübertragungseinrichtung dienende Biegestelle 14 an deren zum beweglichen Parallelogrammschenkel 11 weisenden Seite begrenzt.

Die materialfreien Bereiche 12 und 13, zwischen deren einander paarweise gegenüberstehenden Einwölbungen jeweils als Biegestellen 15, 16 dienende Dünnstellen des Materialblocks 11 begrenzt sind, definieren somit zwischen sich eine Koppel 17, deren die Biegestelle 16 aufweisende eine Endbereich mit dem auslenkbaren Parallelogrammschenkel 11 und deren die Biegestelle 15 bildende andere Endbereich mit dem an der Biegestelle 14 stehend abgestützten Hebel 18 der Kraftübertragungseinrichtung verbunden ist.

Außer dem Hebel 18, der an seiner der Biegestelle 15 entgegengesetzten Seite der Biegestelle 14 durch einen ebenfalls in der Form der dünnen Schnittlinie ausgebildeten materialfreien Bereich 19 begrenzt ist, weist die Kraftübertragungseinrichtung einen weiteren Hebel 25 auf, der an einer Biegestelle 26 abgestützt und durch eine zwei Biegestellen 22, 23 aufweisende weitere Koppel 21 mit dem Hebel 18 an dessen dem auslenkbaren Parallelogrammschenkel 11 entgegengesetzten Ende gekoppelt ist. Wie schon im Falle des Hebels 18 und der Koppel 17 sind auch der weitere Hebel 25, die weitere Koppel 21 sowie die Biegestellen 22, 23 und 26 durch in Form der dünnen Schnittlinie ausgebildete materialfreie Bereiche 20, 24 und 27 begrenzt.

Ersichtlich sind in dieser Kraftübertragungseinrichtung der Hebel 18 und der weitere Hebel 25 mittels der Biegestellen 14 bzw. 26 in dem Materialblock 1 stehend abgestützt. Die auf den auslenkbaren Parallelogrammschenkel 11 eingeleitete zu messende Kraft wirkt als Zugkraft auf die damit über die Biegestelle 16 verbundene Koppel 17, welche ihrerseits über die Biegestelle 15 an dem Hebel 18 angreift. Der Hebel 18 untersetzt dabei die Kraft im Verhältnis seiner durch den Abstand zwischen der Biegestelle 15 und der als Abstützstelle dienenden Biegestelle 14 einerseits sowie der Biegestelle 14 und der als Angriffsstelle der weiteren Koppel 21 dienenden Biegestelle 22 bestimmten Hebelarmlängen. Die untersetzte Kraft wird durch die unter Zug wirkende weitere Koppel 21 über die als Angriffsstelle am weiteren Hebel 25 wirkende Biegestelle 23 auf den weiteren Hebel 25 übertragen.

An dem der Biegestelle 26 jenseits der Biegestelle 23 entgegengesetzten freien Hebelarm 29 des weiteren Hebels 25 sind beidseits des Materialblocks 1 jeweils die freien Enden der U-Schenkel 30 eines in Fig. 1 ersichtlichen U-förmigen Auslegers mittels Schraubbolzen 33 in Gewindebohrungen 34 des freien Hebelarms 29 festgelegt. Seitliche Abstandshalter 35 sorgen dafür, daß die U-Schenkel 30 der Bewegung des weiteren Hebels 25 folgen können, ohne an dem Materialblock 1 zu streifen.

An dem die U-Schenkel 30 an ihrem dem weiteren Hebel 25 abgewandten Ende verbindenden U-Steg ist eine Kompensationsspule für ein als Meßwandler dienendes Kraftkompensationssystem derart befestigt, daß sie in ein von einer Magnetanordnung 38 erzeugtes Magnetfeld eintaucht. Eine Regelschaltung regelt den Kompensationsstrom für die Kompensationsspule derart, daß sie stets in ihre Nullage zurückgeführt wird, wobei als Eingangsgröße für die Regelschaltung ein von einem Positionsgeber geliefertes Stellungssignal für die Kompensationsspule dient. Der Kompensationsstrom stellt damit ein der zu messenden Kraft entsprechendes Signal dar.

Während also in dem dargestellten Ausführungsbeispiel die Kraftübertragungseinrichtung durch eine Hintereinanderschaltung des Hebels 18 und des weiteren Hebels 25 mittels der weiteren Koppel 21 und der Meßwandler durch ein elektromagnetisches Kraftkompensationssystem gebildet ist, können alternativ andere wegarme Meßwandler, wie beispielsweise schwingende Saiten, und andere Kraftübertragungseinrichtungen, insbesondere Systeme mit nur einem Hebel, zur Anwendung kommen.

Die längssteife Koppel 17 ist ebenso wie die längssteife weitere Koppel 21 infolge ihrer Biegestellen 15, 16 bzw. 22, 23 in der Parallelogrammebene biegeelastisch. Statt dieser an den Endbereichen der Koppel 17 bzw. der weiteren Koppel 21 vorgesehenen lokalisierten Biegestellen 15, 16 bzw. 22, 23 könnte alternativ die Biegeelastizität in der Parallelogrammebene auch dadurch hervorgerufen sein, daß die Koppeln 17 bzw. 21 über ihre gesamte Länge nach Art einer Blattfeder kontinuierlich in der Parallelogrammebene biegeelastisch ausgebildet sind. Ähnlich könnte auch die Biegeelastizität der Lenker 2, 3 statt einer Konzentration an deren Biegestellen 6, 7, 8, 9 blattfederartig über die gesamte Länge der Lenker 2, 3 verteilt sein.

Dagegen ist gemäß Fig. 1 und 2 die Koppel 17 mit einem lokalisierten, quer zur Parallelogrammebene biegeelastischen Bereich 36 versehen und im übrigen quer zur Parallelogrammebene biegesteif ausgebildet. Im einzelnen ist in der in Fig. 1 und 2 dargestellten Ausführungsform dieser biegeelastische Bereich 36 der Koppel 17 in ihrer Längserstreckung zwischen den Biegestellen 15 und 16 angeordnet und dadurch gebildet, daß die Koppel 17 von den beiden Hauptebenen des rechteckigen Materialblocks her durch je eine Ausnehmung in ihrer Materialstärke senkrecht zu diesen die Parallelogrammebene bildenden Hauptebenen verringert ist. Infolge der hierdurch erzielten Biegeelastizität der Koppel 17 in der zur Parallelogrammebene senkrechten Ebene kann daher von der Koppel 17 eine Querverdrehung des auslenkbaren Parallelogrammschenkels 11 in der zur Parallelogrammebene senkrechten Ebene ausgeglichen werden, um hierdurch bedingte Fehlereinflüsse von der Kraftübertragungseinrichtung und dem Meßwandler fernzuhalten. Eine derartige Querverdrehung ist immer dann zu erwarten, wenn das Gewicht auf die Waagschale bezüglich des auslenkbaren Parallelogrammschenkels 11 außermittig aufgelegt wird, also durch eine bezüglich der Parallelogrammebene seitlich versetzte Krafteinleitung ein Drehmoment auf den auslenkbaren Parallelogrammschenkel 11 in der zur Parallelogrammebene senkrechten Ebene ausgeübt wird.

Für eine möglichst weitgehende Unterdrückung dieses sog. Seitenlastfehlers kommt es jedoch maßgeblich darauf an, daß der lokalisierte biegeelastische Bereich 36 der Koppel 17 möglichst gut mit der Achse der Querverdrehung des auslenkbaren Parallelogrammschenkels 11 übereinstimmt. Da andererseits der lokalisierte biegeelastische Bereich 36 der sich mit ihrer Längsachse parallel zum auslenkbaren Parallelogrammschenkel 11 erstreckenden Koppel 17 auf einen bestimmten Ort ihrer Längserstreckung gelegt ist, muß also durch die übrige Geometrie der Parallelogrammführung die nötige Übereinstimmung zwischen dem biegeelastischen Bereich 36 und der Achse der Querverdrehung herbeigeführt werden. Dies ist durch eine entsprechende Symmetrieabweichung der beiden den auslenkbaren Parallelogrammschenkel 11 führenden Lenker 2, 3 möglich. Im einzelnen ist bei dem in Fig. 1 und 2 dargestellten Ausführungsbeispiel bedingt durch die Geometrie der Parallelogrammführung und der Kraftübertragungseinrichtung der Abstand zwischen dem lokalisierten biegeelastischen Bereich 36 und dem unteren Lenker 3 kleiner als der Abstand zwischen dem lokalisierten biegeelastischen Bereich 36 und dem oberen Lenker 2. Die die Übereinstimmung der Achse der Querverdrehung mit dem lokalisierten biegeelastischen Bereich 36 herbeiführende Symmetrieabweichung der Lenker 2, 3 besteht darin, daß der obere Lenker 2 im Vergleich zum unteren Lenker 3 mit einem entsprechend dünneren Querschnitt ausgebildet ist, d. h. in Richtung der kürzeren Rechteckkanten des Materialblocks 1 eine geringere Stärke aufweist als der untere Lenker 3.

Neben dem durch den lokalisierten biegeelastischen Bereich 36 der Koppel 17 und dessen Lageübereinstimmung mit der Achse der Querverdrehung unterdrückten Seitenlastfehler kann auch noch ein durch eine in der Parallelogrammebene stattfindende Verformung der Lenker 2, 3 unter Last hervorgerufener weiterer Fehler auftreten, weil wegen dieser Verformung der auslenkbare Parallelogrammschenkel 11 sich nicht mehr streng parallel zum feststehend abgestützten Parallelogrammschenkel 10 bewegt, sondern zusätzlich eine geringfügige Längsverdrehung in der Parallelogrammebene ausführt. Um auch diesen Fehler auf ein Mindestmaß herabzudrücken, ist die Geometrie der Parallelogrammführung derart gewählt, daß die Achse dieser Längsverdrehung im Bereich 36 der Längsachse der Koppel 17 liegt. Insbesondere ist in dem Ausführungsbeispiel von Fig. 1 und 2, bei dem die Biegeelastizität der Koppel 17 in der Parallelogrammebene auf ihre beiden lokalisierten Biegestellen 15, 16 konzentriert ist, die Achse dieser Längsverdrehung in die untere Biegestelle 16 gelegt. Erreicht wird diese Achsenlage durch eine geringfügige Symmetrieabweichung der Parallelogrammführung von einer strengen Parallelogrammform, was in der Darstellung von Fig. 1 und 2 wegen der Geringfügigkeit der Symmetrieabweichung allerdings nicht ersichtlich ist. Im einzelnen ist zur Herstellung dieser Symmetrieabweichung mindestens eine der die Parallelogrammeckpunkte bestimmenden Biegestellen 6, 7, 8 und 9 gegenüber der durch eine strenge Parallelogrammform bestimmten Lage geringfügig abgerückt.

## Patentansprüche

1. Kraftmeßvorrichtung, insbesondere Waage, mit einer einen feststehend abgestützten Parallelogrammschenkel (10), zwei zueinander parallele, längssteife, in der Parallelogrammebene biegeelastische Lenker (2, 3) und einen mittels der Lenker (2, 3) an dem feststehend abgestützten Parallelogrammschenkel (10) parallel auslenkbar geführten Parallelogrammschenkel (11) zur Aufnahme der zu messenden Kraft aufweisenden Parallelogrammführung, einem Meßwandler (38) zur Lieferung eines der zu messenden Kraft entsprechenden Signals, und einer zur Übertragung mindestens eines Teils der den auslenkbar geführten Parallelogrammschenkel (11) belastenden zu messenden Kraft auf den Meßwandler (38) dienenden Einrichtung (18, 21, 25), die mittels einer längssteifen, in der Parallelogrammebene biegeelastischen sowie einen lokalisierten, quer zur Parallelogrammebene biegeelastischen Bereich (36) aufweisenden Koppel (17) an den auslenkbaren Parallelogrammschenkel (11) angekoppelt ist, **dadurch gekennzeichnet**, daß der quer zur Parallelogrammebene biegeelastische Bereich (36) der Koppel (17) in den Bereich der Achse einer bei außermittiger Belastung in der zur Parallelogrammebene senkrechten Ebene auftretenden Querverdrehung des auslenkbar geführten Parallelogrammschenkels (11) gelegt ist.

2. Kraftmeßvorrichtung nach Anspruch 1, **dadurch gekennzeichnet**, daß die Lenker (2, 3) mit einer die Übereinstimmung des quer zur Parallelogrammebene biegeelastischen Bereichs (36) mit der Achse der Querverdrehung herbeiführenden gegenseitigen Symmetrieabweichung ausgebildet sind.

3. Kraftmeßvorrichtung nach Anspruch 1 oder 2, **dadurch gekennzeichnet**, daß der quer zur Parallelogrammebene biegeelastische Bereich (36) der Koppel (17) in den Mittenbereich ihrer zum auslenkbar geführten Parallelogrammschenkel (11) parallelen Längsachse gelegt ist.

4. Kraftmeßvorrichtung, insbesondere Waage, mit einer einen feststehend abgestützten Parallelogrammschenkel (10), zwei zueinander parallele, längssteife, in der Parallelogrammebene biegeelastische Lenker (2, 3) und einen mittels der Lenker (2, 3) an dem feststehend abgestützten Parallelogrammschenkel (10) parallel auslenkbar geführten Parallelogrammschenkel (11) zur Aufnahme der zu messenden Kraft aufweisenden Parallelogrammführung, einem Meßwandler (38) zur Lieferung eines der zu messenden Kraft entsprechenden Signals, und einer zur Übertragung mindestens eines Teils der den auslenkbar geführten Parallelogrammschenkel (11) belastenden zu messenden Kraft auf den Meßwandler (38) dienenden Einrichtung (18, 21, 25), die mittels einer längssteifen, in der Parallelogrammebene biegeelastischen sowie einen lokalisierten, quer zur Parallelogrammebene biegeelastischen Bereich (36) aufweisenden Koppel (17) an den auslenkbaren Parallelogrammschenkel (11) angekoppelt ist, insbesondere nach einem der Ansprüche 1 bis 3, **dadurch gekennzeichnet**, daß die Achse einer bei Belastung in der Parallelogrammebene auftretenden Längsverdrehung des auslenkbar geführten Parallelogrammschenkels (11) in den Bereich der zum auslenkbar geführten Parallelogrammschenkel (11) parallelen Längsachse der Koppel (17) gelegt ist.

5. Kraftmeßvorrichtung nach Anspruch 4, **dadurch gekennzeichnet**, daß die Parallelogrammführung eine die Übereinstimmung der Achse der Längsverdrehung mit dem Bereich der Längsachse der Koppel (17) herbeiführende Symmetrieabweichung von einer strengen Parallelogrammform aufweist.

6. Kraftmeßvorrichtung nach einem der Ansprüche 1 bis 5, **dadurch gekennzeichnet**, daß die in der Parallelogrammebene vorgesehene Biegeelastizität der Koppel (17) auf an deren Endbereichen lokalisierte Biegestellen (15, 16) konzentriert ist, über deren eine (16) die Koppel (17) mit dem auslenkbar geführten Parallelogrammschenkel (11) und über deren andere (15) die Koppel (17) mit der Kraftübertragungseinrichtung, (18, 21, 25) verbunden ist.

7. Kraftmeßvorrichtung nach Anspruch 6, **dadurch gekennzeichnet**, daß die Achse der Längsverdrehung in den Bereich einer der lokalisierten Biegestellen (16) gelegt ist.

8. Kraftmeßvorrichtung nach einem der Ansprüche 1 bis 7, **dadurch gekennzeichnet**, daß die Parallelogrammführung, die Koppel (17) und die Kraftübertragungseinrichtung (18, 21, 25) von Materialbereichen eines einstückigen Materialblocks (1) gebildet sind, die durch von den Materialblock (1) senkrecht zur Parallelogrammebene durchsetzenden Ausnehmungen gebildete materialfreie Bereiche (4, 5, 12, 13, 19, 20, 24, 27) begrenzt sind.

9. Kraftmeßvorrichtung nach Anspruch 8 und einem der Ansprüche 1 bis 6, **dadurch gekennzeichnet**, daß die biegeelastischen Bereiche (6, 7, 8, 9, 14, 15, 16, 22, 23, 26, 36) durch Dünnstellen der betreffenden Materialbereiche gebildet sind.

10. Kraftmeßvorrichtung nach einem der Ansprüche 1 bis 9, **dadurch gekennzeichnet**, daß die Kraftübertragungseinrichtung mindestens einen zwischen der Koppel (17) und dem Meßwandler (38) angeordneten Hebel (18) aufweist.

11. Verfahren zur Herstellung einer Kraftmeßvorrichtung, insbesondere einer Waage, mit einer einen feststehend abgestützten Parallelogrammschenkel (10), zwei zueinander parallele, längssteife, in der Parallelogrammebene biegeelastische Lenker (2, 3) und einen mittels der Lenker (2, 3) an dem feststehend abgestützten Parallelogrammschenkel (10) parallel auslenkbar geführten Parallelogrammschenkel (11) zur Aufnahme der zu messenden Kraft aufweisenden Parallelogrammführung, einem Meßwandler (38) zur Lieferung eines der zu messenden Kraft entsprechenden Signals, und einer zur Übertragung mindestens eines Teils der den auslenkbar geführten Parallelogrammschenkel (11) belastenden zu messenden Kraft auf den Meßwandler (38) dienenden Einrichtung (18, 21, 25), die mittels einer längssteifen, in der Parallelogrammebene biegeelastischen sowie einen lokalisierten, quer zur Parallelogrammebene biegeelastischen Bereich (36) aufweisenden Koppel (17) an den auslenkbaren Parallelogrammschenkel (11) angekoppelt ist, **dadurch gekennzeichnet**, daß man den quer zur Parallelogrammebene biegeelastischen Bereich der Koppel an eine vorbestimmte Stelle auf der zum auslenkbar geführten Parallelogrammschenkel parallelen Längsachse der Koppel legt und die Achse einer bei außermittiger Belastung in der zur Parallelogrammebene senkrechten Ebene auftretenden Querverdrehung des auslenkbar geführten Parallelogrammschenkels durch eine gegenseitig unsymmetrische Ausbildung der beiden Lenker in den Bereich der vorbestimmten Stelle legt.

12. Verfahren nach Anspruch 11, **dadurch gekennzeichnet**, daß man die vorbestimmte Stelle in die Mitte der Längsachse der Koppel legt.

13. Verfahren zur Herstellung einer Kraftmeßvorrichtung, insbesondere einer Waage, mit einer einen feststehend abgestützten Parallelogrammschenkel (10), zwei zueinander parallele, längssteife, in der Parallelogrammebene biegeelastische Lenker (2, 3) und einen mittels der Lenker (2, 3) an dem feststehend abgestützten Parallelogrammschenkel (10) parallel auslenkbar geführten Parallelogrammschenkel (11) zur Aufnahme der zu messenden Kraft aufweisenden Parallelogrammführung, einem Meßwandler (38) zur Lieferung eines der zu messenden Kraft entsprechenden Signals, und einer zur Übertragung mindestens eines Teils der den auslenkbar geführten Parallelogrammschenkel (11) belastenden zu messenden Kraft auf den Meßwandler (38) dienenden Einrichtung (18, 21, 25), die mittels einer längssteifen, in der Parallelogrammebene biegeelastischen sowie einen lokalisierten, quer zur Parallelogrammebene biegeelastischen Bereich (36) aufweisenden Koppel (17) an den auslenkbaren Parallelogrammschenkel (11) angekoppelt ist, **dadurch gekennzeichnet**, daß man die Achse einer bei Belastung in der Parallelogrammebene auftretenden Längsverdrehung des auslenkbar geführten Parallelogrammschenkels durch eine von der strengen Parallelogrammsymmetrie abweichende Formgebung der Parallelogrammführung in den Bereich der Längsachse der Koppel legt.

14. Verfahren nach Anspruch 13, **dadurch gekennzeichnet**, daß man die Biegeelastizität der Koppel in der Parallelogrammebene durch an den Endbereichen der Koppel lokalisierte Biegestellen herstellt und die Achse der Längsverdrehung in eine dieser lokalisierten Biegestellen der Koppel legt.

## Claims

1. Force-sensing device, in particular a balance, having a parallelogram guide which has a parallelogram side (10) supported in a fixed manner, two longitudinally rigid guide bars (2, 3) parallel with one another and flexible in the plane of the parallelogram, and a parallelogram side (11) for taking up the force to be measured, which parallelogram side (11) is guided, by means of the guide bars (2, 3), for parallel deflection, on the parallelogram side (10) that is supported in a fixed manner, a measuring transformer (38) for delivering a signal corresponding to the force to be measured, and a device (18, 21, 25) serving to transmit to the measuring transformer (38) at least part of the force which is to be measured and with which the parallelogram side (11) that is guided for parallel deflection is loaded, which device is connected to the deflectable parallelogram side (11) by means of a longitudinally rigid coupler (17) which is flexible in the plane of the parallelogram and which has a localised region (36) that is flexible in a transverse direction relative to the plane of the parallelogram, characterised in that the region (36) of the coupler (17) that is flexible in a transverse direction relative to the plane of the parallelogram is placed in the region of the axis of a lateral torsion of the parallelogram side (11) guided for deflection, which lateral torsion occurs in the case of off-centre loading in the perpendicular plane relative to the plane of the parallelogram.

2. Force-sensing device according to claim 1, characterised in that the guide bars (2, 3) are formed with a mutual deviation from symmetry which brings about conformity of the region (36) that is flexible in a transverse direction relative to the plane of the parallelogram with the axis of the lateral torsion.

3. Force-sensing device according to claim 1 or 2, characterised in that the region (36) of the coupler (17) that is flexible in a transverse direction relative to the plane of the parallelogram is placed in the middle region of the longitudinal axis of the said coupler, which axis is parallel with the parallelogram side (11) that is guided for deflection.

4. Force-sensing device, in particular a balance, having a parallelogram guide which has a parallelogram side (10) supported in a fixed manner, two longitudinally rigid guide bars (2, 3) parallel with one another and flexible in the plane of the parallelogram, and a parallelogram side (11) for taking up the force to be measured, which parallelogram side (11) is guided, by means of the guide bars (2, 3), for parallel deflection, on the parallelogram side (10) that is supported in a fixed manner, a measuring transformer (38) for delivering a signal corresponding to the force to be measured, and a device (18, 21, 25) serving to transmit to the measuring transformer (38) at least part of the force which is to be measured and with which the parallelogram side (11) that is guided for parallel deflection is loaded, which device is connected to the deflectable parallelogram side (11) by means of a longitudinally rigid coupler (17) which is flexible in the plane of the parallelogram and which has a localised region (36) that is flexible in a transverse direction relative to the plane of the parallelogram, in particular according to one of claims 1 to 3, characterised in that the axis of a longitudinal torsion of the parallelogram side (11) guided for deflection, which longitudinal torsion occurs in the case of loading in the plane of the parallelogram, is placed in the region of the longitudinal axis of the coupler (17), which axis is parallel with the parallelogram side (11) guided for deflection.

5. Force-sensing device according to claim 4, characterised in that the parallelogram guide has a deviation of symmetry from a strict parallelogram shape, which deviation from symmetry brings about conformity of the axis of the longitudinal torsion with the region of the longitudinal axis of the coupler (17).

6. Force-sensing device according to one of claims 1 to 5, characterised in that the flexibility of the coupler (17) provided in the plane of the parallelogram is concentrated at bending places (15, 16) localised in end regions of the said coupler (17), the coupler (17) being connected by way of one bending place (16) to the parallelogram side (11) that is guided for deflection, and the coupler (17) being connected by way of the other bending place (15) to the force transmission device (18, 21, 25).

7. Force-sensing device according to claim 6, characterised in that the axis of the longitudinal torsion is placed in the region of one of the localised bending places (16).

8. Force-sensing device according to one of claims 1 to 7, characterised in that the parallelogram guide, the coupler (17) and the force transmission device (18, 21, 25) are formed from material regions of a material block (1) in one piece, which material regions are bounded by regions (4, 5, 12, 13, 19, 20, 24, 27) free from material and formed by recesses which penetrate the material block (1) perpendicularly relative to the plane of the parallelogram.

9. Force-sensing device according to claim 8 and one of claims 1 to 6, characterised in that the flexible regions (6, 7, 8, 9, 14, 15, 16, 22, 23, 26, 36) are formed by thin places in the material regions in question.

10. Force-sensing device according to one of claims 1 to 9, characterised in that the force transmission device has at least one lever (18) arranged between the coupler (17) and the measuring transformer (38).

11. Method for manufacturing a force-sensing device, in particular a balance, having a parallelogram guide which has a parallelogram side (10) supported in a fixed manner, two longitudinally rigid guide bars (2, 3) parallel with one another and flexible in the plane of the parallelogram, and a parallelogram side (11) for taking up the force to be measured, which parallelogram side (11) is guided, by means of the guide bars (2, 3), for parallel deflection, on the parallelogram side (10) that is supported in a fixed manner, a measuring transformer (38) for delivering a signal corresponding to the force to be measured, and a device (18, 21, 25) serving to transmit to the measuring transformer (38) at least part of the force which is to be measured and with which the parallelogram side (11) that is guided for parallel deflection is loaded, which device is connected to the deflectable parallelogram side (11) by means of a longitudinally rigid coupler (17) which is flexible in the plane of the parallelogram and which has a localised region (36) that is flexible in a transverse direction relative to the plane of the parallelogram, characterised in that the region (36) of the coupler that is flexible in a transverse direction relative to the plane of the parallelogram is placed at a pre-determined position on the longitudinal axis of the coupler, which axis is parallel with the parallelogram side guided for deflection, and the axis of a lateral torsion of the parallelogram side guided for deflection, which lateral torsion occurs in the case of off-centre loading in the plane that is perpendicular relative to the plane of the parallelogram, is placed in the region of the pre-determined position by means of a mutually asymmetrical formation of the two guide bars.

12. Method according to claim 11, characterised in that the pre-determined position is placed in the middle of the longitudinal axis of the coupler.

13. Method for producing a force-sensing device, in particular a balance, having a parallelogram guide which has a parallelogram side (10) supported in a fixed manner, two longitudinally rigid guide bars (2, 3) parallel with one another and flexible in the plane of the parallelogram, and a parallelogram side (11) for taking up the force to be measured, which parallelogram side (11) is guided, by means of the guide bars (2, 3), for parallel deflection, on the parallelogram side (10) that is supported in a fixed manner, a measuring transformer (38) for delivering a signal corresponding to the force to be measured, and a device (18, 21, 25) serving to transmit to the measuring transformer (38) at least part of the force which is to be measured and with which the parallelogram side (11) that is guided for parallel deflection is loaded, which device is connected to the deflectable parallelogram side (11) by means of a longitudinally rigid coupler (17) which is flexible in the plane of the parallelogram and which has a localised region (36) that is flexible in a transverse direction relative to the plane of the parallelogram, characterised in that the axis of a longitudinal torsion of the parallelogram side that is guided for deflection, which longitudinal torsion occurs in the case of loading in the plane of the parallelogram, is placed in the region of the longitudinal axis of the coupler by means of a conformation of the parallelogram guide which deviates from the strict symmetry of the parallelogram.

14. Method according to claim 13, characterised in that the flexibility of the coupler in the plane of the parallelogram is produced by means of localised bending places in the end regions of the coupler, and the axis of the longitudinal torsion is placed in one of these localised bending places in the coupler.

## Revendications

1. Dispositif de mesure de force, en particulier balance, avec un guidage à parallélogramme présentant une branche de parallélogramme (10) fixe, soutenue, deux bras articulés (2, 3) parallèles, rigides dans la direction longitudinale, présentant une élasticité en flexion dans le plan du parallélogramme et une branche de parallélogramme (11), guidée de façon à permettre un débattement en restant orientée parallèlement, sur la branche de parallélogramme (10) fixe soutenue, pour supporter la force à mesurer, avec un convertisseur de mesure (38) destiné à fournir un signal correspondant à la force à mesurer, avec un dispositif (18, 21, 22) servant à transmettre au convertisseur de mesure (38) au moins une partie de la force à mesurer, sollicitant la branche de parallélogramme (11) guidée de façon à permettre un débattement, le dispositif (18, 21, 25) étant couplé à la branche de parallélogramme (11) susceptible d'effectuer un débattement au moyen d'un couplage (17) rigide en direction longitudinale, présentant une élasticité de flexion dans le plan du parallélogramme, ainsi que présentant une zone (36) localisée, présentant une élasticité en flexion transversalement par rapport au plan du parallélogramme, caractérisé en ce que la zone (36), présentant une élasticité en flexion par rapport au plan du parallélogramme, du couplage (17), est située dans la région de l'axe d'une rotation transversale de la branche de parallélogramme (11) guidée de façon à permettre un débattement et se produisant, en cas de sollicitation excentrée, dans le plan perpendiculaire au plan de parallélogramme.

2. Dispositif de mesure de force selon la revendication 1, caractérisé en ce que les bras articulés (2, 3) sont réalisés avec un écart de symétrie mutuel, provoquant la coïncidence de la région (36) présentant une élasticité de flexion, transversalement par rapport au plan du parallélogramme, avec l'axe de la rotation transversale.

3. Dispositif de mesure de force selon la revendication 1 ou 2, caractérisé en ce que la région (36), présentant une élasticité en flexion transversalement par rapport au plan du parallélogramme du couplage (17), est placée dans la zone médiane de son axe longitudinal parallèle à la branche de parallélogramme (11) guidée de façon à permettre un débattement.

4. Dispositif de mesure de force, en particulier balance, avec un guidage à parallélogramme présentant une branche de parallélogramme (10) fixe, soutenue, deux bras articulés (2, 3) parallèles, rigides dans la direction longitudinale, présentant une élasticité en flexion dans le plan du parallélogramme et une branche de parallélogramme (11), guidée de façon à permettre un débattement en restant orientée parallèlement, sur la branche de parallélogramme (10) fixe soutenue, pour supporter la force à mesurer, avec un convertisseur de mesure (38) destiné à fournir un signal correspondant à la force à mesurer, avec un dispositif (18, 21, 22) servant à transmettre au convertisseur de mesure (38) au moins une partie de la force à mesurer, sollicitant la branche de parallélogramme (11) guidée de façon à permettre un débattement, le dispositif (18, 21, 25) étant couplé à la branche de parallélogramme (11) susceptible d'effectuer un débattement au moyen d'un couplage (17) rigide en direction longitudinale, présentant une élasticité de flexion dans le plan du parallélogramme, ainsi que présentant une zone (36) localisée, présentant une élasticité en flexion transversalement par rapport au plan du parallélogramme, caractérisé en ce que l'axe d'une rotation longitudinale, se produisant en cas de charge dans le plan du parallélogramme, de la branche de parallélogramme (11), guidée de façon à permettre un débattement, est placé dans la zone de l'axe longitudinal, parallèle à la branche de parallélogramme (11), guidée de façon à permettre un débattement, du couplage (17).

5. Dispositif de mesure de force selon la revendication 4, caractérisé en ce que le guidage en parallélogramme présente un écart de symétrie, par rapport à une forme stricte de parallélogramme, écart provoquant la coïncidence entre l'axe de rotation longitudinale avec la zone de l'axe longitudinal du couplage (17).

6. Dispositif de mesure de force selon l'une des revendications 1 à 5, caractérisé en ce que l'élasticité en flexion prévue dans le plan du parallélogramme, du couplage (17), est concentrée sur ses points de flexion (15, 16) localisés sur ses zones d'extrémité, points de flexion sur l'un (16) desquels le couplage (17) est relié à la branche de parallélogramme (11) guidée de façon à permettre un débattement et sur l'autre (15) desquels le couplage (17) est relié au dispositif de transmission de force (18, 21, 25).

7. Dispositif de mesure de force selon la revendication 6, caractérisé en ce que l'axe de la rotation longitudinale est situé dans la zone de l'un (16) des points de flexion localisés.

8. Dispositif de mesure de force selon l'une des revendications 1 à 7, caractérisé en ce que le guidage à parallélogramme, le couplage (17) et le dispositif de transmission de force (18, 21, 25) sont constitués par des zones de matière d'un bloc de matière (1) monopièce, délimitées par des zones (4, 5, 12, 13, 19, 20, 24, 27) exemptes de matériau, constituées par des évidements traversant le bloc de matériau (1) perpendiculairement par rapport au plan du parallélogramme.

9. Dispositif de mesure de force selon la revendication 8 et l'une des revendications 1 à 6, caractérisé en ce que les zones (6, 7, 8, 9, 14, 15, 16, 22, 23, 26, 36), présentant une élasticité en flexion, sont constituées par des points de minceur des zones de matériau concernées.

10. Dispositif de mesure de force selon l'une des revendications 1 à 9, caractérisé en ce que le dispositif de transmission de force présente au moins un levier (18), disposé entre le couplage (17) et le convertisseur de mesure (38).

11. Procédé de fabrication d'un dispositif de mesure de force, en particulier balance, avec un guidage à parallélogramme présentant une branche de parallélogramme (10) fixe, soutenue, deux bras articulés (2, 3) parallèles, rigides dans la direction longitudinale, présentant une élasticité en flexion dans le plan du parallélogramme et une branche de parallélogramme (11), guidée de façon à permettre un débattement en restant orientée parallèlement, sur la branche de parallélogramme (10) fixe soutenue, pour supporter la force à mesurer, avec un convertisseur de mesure (38) destiné à fournir un signal correspondant à la force à mesurer, avec un dispositif (18, 21, 22) servant à transmettre au convertisseur de mesure (38) au moins une partie de la force à mesurer, sollicitant la branche de parallélogramme (11) guidée de façon à permettre un débattement, le dispositif (18, 21, 25) étant couplé à la branche de parallélogramme (11) susceptible d'effectuer un débattement au moyen d'un couplage (17) rigide en direction longitudinale, présentant une élasticité de flexion dans le plan du parallélogramme, ainsi que présentant une zone (36) localisée, présentant une élasticité en flexion transversalement par rapport au plan du parallélogramme, caractérisé en ce que l'on place la zone, présentant une élasticité en flexion, transversalement par rapport au plan du parallélogramme, du couplage, en un endroit prédéterminé sur l'axe longitudinal, parallèle à la branche de parallélogramme, guidée de façon à permettre un débattement, du couplage, et l'axe d'une rotation transversale, se produisant, en cas de sollicitation excentrée, dans le plan perpendiculaire par rapport au plan du parallélogramme, de la branche de parallélogramme, guidée de façon à permettre un débattement, par une réalisation mutuellement asymétrique des deux bras articulés, dans la zone du point prédéterminé.

12. Procédé selon la revendication 1, caractérisé en ce que le point prédéterminé se situe au centre de l'axe longitudinal du couplage.

13. Procédé de fabrication d'un dispositif de mesure de force, en particulier balance, avec un guidage à parallélogramme présentant une branche de parallélogramme (10) fixe, soutenue, deux bras articulés (2, 3) parallèles, rigides dans la direction longitudinale, présentant une élasticité en flexion dans le plan du parallélogramme et une branche de parallélogramme (11), guidée de façon à permettre un débattement en restant orientée parallèlement, sur la branche de parallélogramme (10) fixe soutenue, pour supporter la force à mesurer, avec un convertisseur de mesure (38) destiné à fournir un signal correspondant à la force à mesurer, avec un dispositif (18, 21, 22) servant à transmettre au convertisseur de mesure (38) au moins une partie de la forcé à mesurer, sollicitant la branche de parallélogramme (11) guidée de façon à permettre un débattement, le dispositif (18, 21, 25) étant couplé à la branche de parallélogramme (11) susceptible d'effectuer un débattement au moyen d'un couplage (17) rigide en direction longitudinale, présentant une élasticité de flexion dans le plan du parallélogramme, ainsi que présentant une zone (36) localisée, présentant une élasticité en flexion transversalement par rapport au plan du parallélogramme, caractérisé en ce que l'on place l'axe d'une rotation longitudinale, se produisant en cas de charge dans le plan du parallélogramme, de la branche de parallélogramme guidée de façon à permettre un débattement, dans la zone de l'axe longitudinal du couplage, ceci en donnant une configuration différant d'une symétrie stricte de parallélogramme au guidage à parallélogramme.

14. Procédé selon la revendication 13, caractérisé en ce que l'élasticité en flexion du couplage, dans le plan du parallélogramme, est établie au moyen de points de flexion, localisés dans les zones d'extrémité du couplage, et l'axe de la rotation longitudinale est situé dans l'un de ces points de flexion localisés du couplage.
